# EUROPEAN PATENT SPECIFICATION

(11) **EP 2 427 340 B1**
(45) Date of publication and mention of the grant of the patent: **20.11.2013**
(21) Application number: 09844307.0
(22) Date of filing: 04.05.2009
(51) Int. Cl.: B60D 1/58, B60R 3/00, B60D 1/06, B60R 9/06, B60R 9/00, B62D 25/22

(54) **STEP BOARD**
TRITTBRETT
MARCHEPIED

(43) Date of publication of application: 14.03.2012
(73) Proprietor: Rowaspro OY, 80260 Joensuu (FI)
(72) Inventor: HYVÄRINEN, Jouni, FI-80260 Joensuu (FI); HYVÄRINEN, Pentti, FI-00950 Helsinki (FI)
(74) Representative: Pitkänen, Hannu Alpo Antero
(86) International application number: PCT/FI2009/050356
(87) International publication number: WO 2010/128195

(56) References cited:
- WO-A1-99/01303
- DE-A1- 19 524 077
- FI-L- 20 080 117
- GB-A- 2 248 814
- US-A1- 2009 079 157
- US-B1- 7 229 130

## Description

The invention relates to a step board.

For decades, the transport capacity of cars has been increased by designing and manufacturing brand-specific structures, commonly referred to as roof racks, on which it is possible to transport on top of the car items of awkward size or shape, such as tools, recreational equipment and other such items which do not fit inside or into the boot due to their physical size or which are not elected to put inside the car for the duration of the trip due to dirtiness or some other reason. The ease of use and handiness of roof racks have been further increased by transport boxes provided with covers fastenable in the roof racks, whereby it is possible to avoid the strapping of the load in the racks.

Furthermore, trailers releasably fastenable in towing hitches coupled in vehicles are naturally utilised, which increase the transport capacity considerably, and various hangers coupled to the towing hitch, in which e.g. bicycles can be transported.

Such an arrangement is described e.g. in patent specification DE19524077 in which a mechanism formed by some kind of scissor arms and two opposite sockets fittable to a ball installed in it is fastened in the ball of a towing hitch. The arms cause a great pressing force which, when applied to the ball, provides sufficient friction between the ball and the mechanism for fastening a light rack. Due to its structure and operating principle, the apparatus does not form a plane of suitable shape to be used such that a person could ascend above the ground plane by means of it.

It is previously known that in the towing hitch are also fastened structures facilitating the climbing into the vehicle, such as the structure described in patent specification GB2242659 in which in the towing hitch is fastened a step which is tightened in place by means of three screws which are set such that they tighten to a cylindrical surface below the hitch keeping the step in place. The device described in this specification can probably be used to facilitate the handling of items on the roof. The device depicted in the specification includes a serious disadvantage from the viewpoint of the user: the step has to be fastened by driving three screws with a screwdriver. In order for the ball be able to go to the bottom of the fastening element, all three screws have to be unscrewed almost totally in order for a circular space of at least 50 mm be formed between the screw heads. When the ball is at the bottom, all three screws have to be driven back down such that they all are at a suitable distance from the ball arm. If one of the screws is in too deep, some other screw cannot go deep enough, whereby the whole step board sets in an oblique position, which causes a danger to the user when mounting the step. A prerequisite for the safe use of the step is that it is installed horizontally. The fastening is thus extremely slow and awkward, whereby it is possible that its detachment is not performed after the use. Furthermore, at least one of the three screws is always directed towards the vehicle, whereby its driving in the vicinity of the car bumper is laborious, even impossible. Fastening the device in place requires the use of a separate tool, which always includes the risk of it becoming lost.

Patent specification NL8603126 again describes a rack intended for transporting camping gear, in which the fastening takes place by pressing the ball vertically via a standard capping of the ball and the thus provided friction between the ball and the apparatus elements keeps the rack in place.

Document US 2009/0079157 A1 discloses a step board fastenable to the towing hitch of a vehicle, the step board including a middle body in which there is an opening and a space for the towing hitch, wherein the seat board assembly includes step halves on both sides of the middle body, rotatably fastened to the middle body.

There exist other devices developed to facilitate the loading of a vehicle and climbing into it which can be coupled in place of the actual towing hitch by detaching the towing hitch intended for snap-in fastening and by installing instead a step board which includes a fastening element which can be coupled like the actual towing hitch to a towing hitch fastener fixedly installed in the vehicle. Characteristic of this arrangement is that the step board is brand-specific, i.e. it is limited to the brand and model of the towing hitch in question and it cannot be installed in towing hitches of some other brand, because manufactures have their own methods to detach and fasten the hitch section. Such an arrangement is described as an example of prior art in specification US2005275187.

Transporting items on the car roof is in some cases temporary, such as in the case of recreational equipment, or commercial, such as transporting various professional tools and articles. Most of the cars, particularly in recreational use, are normal family cars in which reaching the items on the roof is not a great problem for a person of average height. However, the most important car manufactures now have a selection of the so-called multi-purpose vehicles and cross-over wagons, which are substantially taller than normal family cars, and also all-terrain vehicles intended for off-road use and lightweight vehicles with four wheel drive intended for limited off-road use, the so-called sports utility vehicles. A common characteristic of all these is the high bodywork, whereby even a person of average height requires auxiliary means to reach the roof. This is particularly the case when on the roof rack is additionally installed a transport box with a cover over the rims of which the person must be able to reach to take items, such as snowboards and/or skis, out of the box. Typically, the items are elongated and light as the load of the roof rack is limited.

Reaching the items without auxiliary means, which are not available in practice, is awkward and might lead to injury if the person uses only the towing hitch standing on it on one foot. It is at least inconvenient as the person touches the outer surface of the vehicle when reaching for the items, which can be muddy and cause the dirtying of clothes. Furthermore, the paintwork of the car can be scratched. The case being of a short person, bringing the items out can prove impossible when the person cannot reach the items on the roof at all and, on the other hand, cannot reach to put them there.

An object of the invention is to introduce a step board by means of which disadvantages related to prior art are eliminated. Furthermore, an object of the invention is to introduce a step board by means of which an arrangement safe and easy to use is provided to eliminate the above problem such that persons of all heights can with ease and safely reach to put items onto the car roof or take them from the roof. A particular object of the invention is to introduce a step board using which a plane large enough can be installed in the towing hitch of a car without tools on which a person can safely step such that the person stands sturdily supported by both feet.

The object of the invention is achieved with a step board according to claim 1.

The step board according to the invention substantially facilitates the reaching of items transported on the car roof when no trailer or other auxiliary equipment is coupled to the towing hitch i.e. when the hitch is free from its other uses.

An essential characteristic of the step board according to the invention is its fastening arrangement and fastening mechanism in which, with suitable arrangements, a firm grip is obtained of the different surfaces of the towing hitch, such as the spherical surface of the ball and, on the other hand, the cylindrical surface below the ball without the noteworthy participation of friction between the sections in the fastening.

The invention is superiorly usable because of its snap-in fastening property due to which the device can be installed in a few seconds into any standard hitch, whereby it can be used in several vehicles irrespective of the hitch manufacturer; it can be sold or temporarily lent to anyone with a towing hitch in his/her vehicle. As the device is quickly fastenable, its use is flexible and the threshold to use it for small requirements is particularly low. Because the detachment is in practice quicker than the fastening, the use of the device is effortless as it remains clean and neat because there is no need to leave it in the towing hitch for the duration of the drive where it dirties with high probability. Even though the size of the device is already small, placing it in a suitable space in the car booth is easy as the device can be doubly folded, whereby a suitable place can be found naturally. It is also possible to leave the device unfolded or to fold it partially, whereby finding suitable places is more and more probable. Furthermore, it is possible to design and manufacture a sturdy enough case for the device which is a handy storage place for the device suitably fastened in the booth of a typical multi-purpose vehicle, on one of the side walls, enabling its use also when the booth is loaded full. When opening the rear door of the car, the device in its case is visible and easy to take out. In a spacious car, there probably are several suitable storage places for the device irrespective of the load situation.

When fastening the step board in the vehicle, it is of primary importance from the viewpoint of safety that the step board does not flip when a person ascends or descends it. The step board according to the invention includes means for adjusting the gap between the vehicle and the step such that the step board is supported on the back part of the car and flipping is prevented.

The step board of the invention also includes necessary devices and elements to compensate extra clearances caused by possible wear, as well as to compensate the relatively large variation i.e. tolerance in the diameter of the neck of the standard hitch. Furthermore, when using the step board according to the invention, the horizontal position of the step can be adjusted in case the centre axis of the hitch is not exactly vertical due to an error in installation, manufacture or design.

Finally, the step board according to the invention also includes means for securing the locking such that it is neither possible to fasten the step incompletely nor unintendedly open the fastening during use.

Next, the invention will be described in more detail with reference to the accompanying figures in which
Fig. 1 shows dimensions essential to the invention of a towing hitch defined by standard ISO3853,
Fig. 2 shows an oblique side view of a step board according to the invention in its storage position,
Fig. 3 shows an oblique side view of the step board of Fig. 2 one half turned into the locking position,
Fig. 4a shows a side view of and partially cut the step board of Fig. 2 turned into the locking position,
Fig. 4b shows separately and an oblique top view of a half, a sleeve, a cam and a middle body of the step board according to Fig. 4a,
Fig. 5a shows a side view of, partially cut, the step board one half turned into the locking position,
Fig. 5b shows the step board according to Fig. 5a, and
Fig. 6 shows a bottom view of adjusting the step board.

The step board or step according to the figures includes two mainly similar halves 2 and a middle body 3 between them in which the halves 2 are rotatably pivoted. The middle body 3 includes an opening and a space for a towing hitch 4, 5. Furthermore, the middle body includes sleeves 1 movable towards the opening and a transfer mechanism 6 of the sleeves which is arranged to transfer the sleeves against the towing hitch and to lock the step board against the towing hitch when the halves are turned mainly horizontal.

The halves of the step board according to the figures include rotating bodies 13 pivoted in the middle body 3 and cams 6 in the rotating bodies for the linear transfer of the sleeves. In the rotating bodies are also fastened lock sleeves 14 movably in the longitudinal direction and the middle body includes locking points 20 for the lock sleeves in order to lock the rotating bodies in the middle body. The middle body also includes a support section 9 above the opening for the top part of the ball section 4 of the towing hitch, which support part is sideways adjustable in relation to the sleeves 1 tightening against the neck section of the hitch.

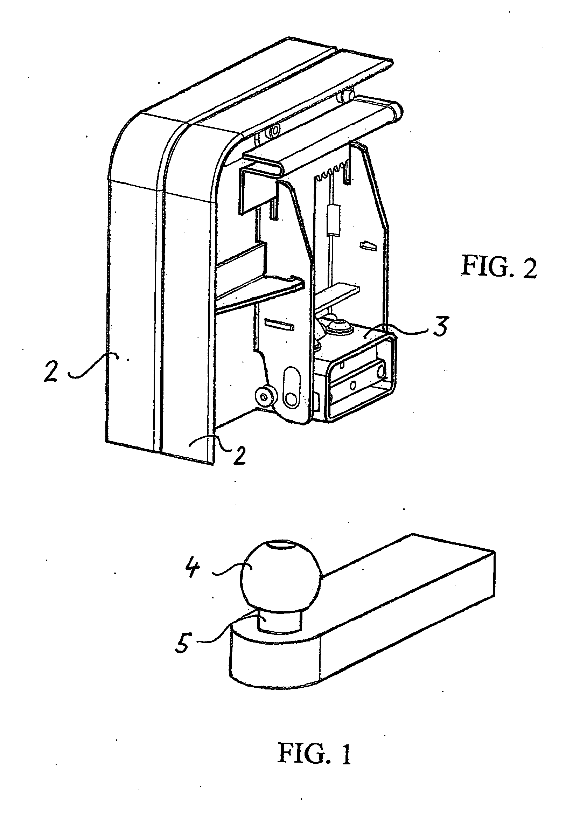

Fig. 2 shows how the halves 2 of the step board are folded up. This position is also the most probable storage position. The step board is ready to be coupled to the towing hitch of the car by guiding the ball 4 of the towing hitch within the opening on the lower surface of the middle body 3 of the step.

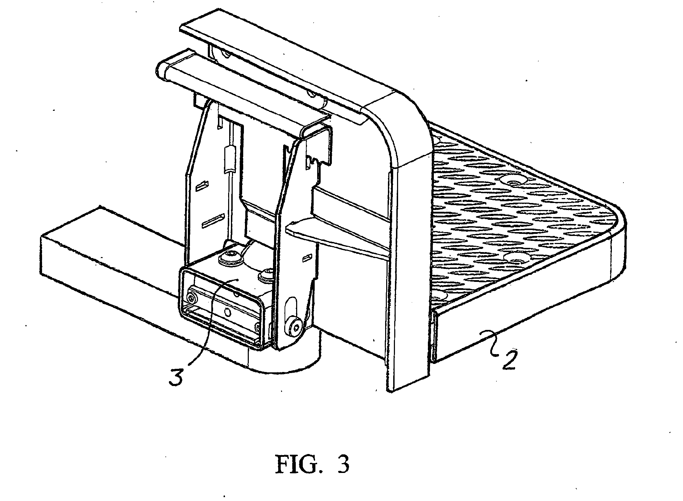

According to Fig. 3, the step board consists of two halves 2 the main sections of which are the rotating bodies 13 which are pivotedly fastened in the middle body 3 and, in relation to which, they rotate in different directions for about 90 degrees. In the figure, the step board is installed in the ball 4 of the towing hitch and the right-hand half 2 is turned horizontal into a locking position, whereby a plane is formed which a person can mount.

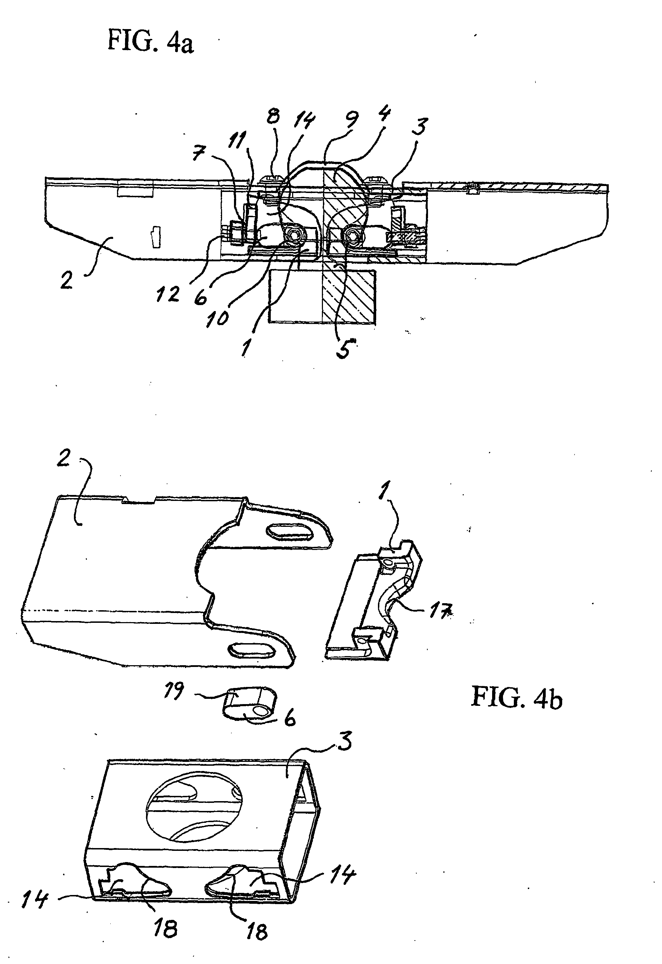

Fig. 4a shows as partially cut an arrangement according to the invention in which the halves 2 of the step board are turned down to their extreme position, whereby simultaneously the device is fastened and tightened around the ball 4 and the neck section 5 of the hitch. At the same time is shown how the sleeves 1 and 1a are transferred forced by the cams 6 and 6a fastened in the bodies of the step halves towards the neck section 5 of the ball which, when the rotational motions of the step halves 2 have reached their extreme positions, they press with a force the magnitude of which is dependent on the adjustment of adjustable screws 7. It is seen from the figure that the sleeves 1 are below the ball 4 of the towing hitch such that the step board is sturdily fast in the hitch the ball capping being surrounded by the ball socket 9. For clarity, some essential parts have been shown in Fig. 4b also isometrically, inter alia, the sleeve 1 which shows a shape 17 setting around the neck section 5 of the ball.

Fig. 4b also shows counter pieces 11 and adjustable screws 12 by means of which it is possible to compensate both the possible wear of the cams 6 and the considerably large tolerance in the diameter of the ball neck 5.

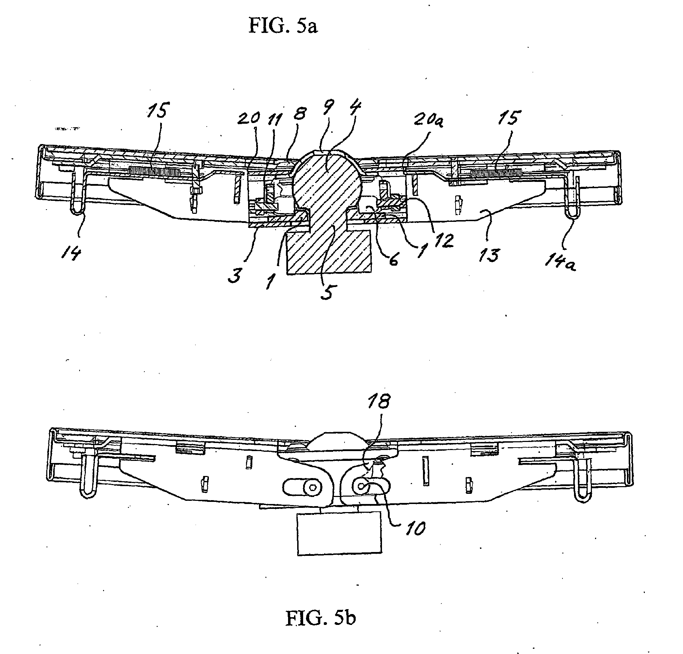

Fig. 5 shows a locking element 14 which the user must press and release in order to ensure the locking of the step board in the hitch ball. The figure also shows the ball socket 9 in which the ball sets. The socket can be adjusted sidewards or forward and backward, whereby the possible obliquity of the hitch from the vertical direction can be compensated. The socket 9 is fastened in the middle body 3 of the device by means of screws 8.

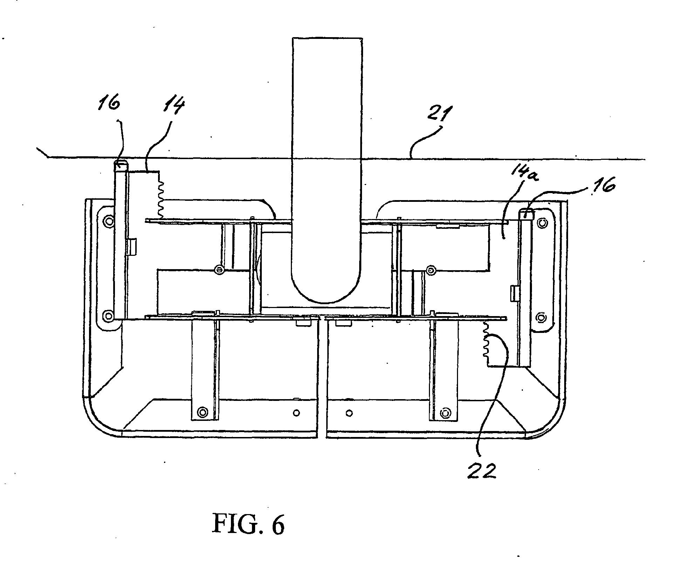

Fig. 6 shows how the above locking element 14 can be adjusted forward and backward by means of a toothing 22 to minimise the gap between a bumper 21 and the step and to eliminate the flipping of the step.

Figs. 1, 4, 5a and 5b show the towing hitch defined by standard ISO3853 which consists of the ball 4, the nominal diameter of which is 50 mm and the dimension tolerance h13, and the cylindrical arm section 5, the thickness of which is 29+0/-2 mm. The ball must also have a plane on the upper surface the diameter of which is 18 mm and a rounding R3 at the junction between the cylindrical surface and the ball. The length of the cylinder from the centre of the ball is 32 mm at the minimum.

Fig. 5 shows a middle body 3 of a step board according to the invention simplified and partially cut to facilitate understanding, in which is fastened the ball socket 9 with the screws 8, and the sleeve sections 1 moving within the middle body 3. In the sleeve sections 1 are fastened the cams 6 by means of screws 10. The counter pieces 11 are fastened in the middle section with the screws 12.

In the middle body 3 have been manufactured triangular openings 14 for each four cams 6 in which the cams can rotate for about 90 degrees i.e. the openings and the cams form a sort of a pivot.

In the middle body 3 are arranged the screws 7 such that, by adjusting them, the counter pieces 11 move towards the neck section 5 of the hitch pushing the sleeves 1 in front of them via the cams 6 so far that clearances are removed and the coupling of the device is still not overpoweringly heavy. This way, the quite large manufacturing tolerance in the diameter of the hitch neck and the increased clearance due to possible wear are compensated. It should be noticed that said adjustment is further possibly required only when installing the device in the hitch for the first time; the normal fastening takes place without tools. The curved shape 17 made in the sleeve 1 is supported around the hitch neck in the tightening stage and fastens in it without clearance. The sleeve is again installed within the middle body 3 such that the substantially small clearance between the body 3 and the sleeve 1 allows the locking motion, but is not harmfully large from the viewpoint of usage.

The cams 6 are also installed in openings of the same shape in the rotating bodies 13 such that, when turning the rotating bodies 13 by hand, together or separately upwards, the cams turn along so much as the triangular openings 14 in the middle section allow.

In practice in this arrangement, the cams roll along curved surfaces 18 of the triangular opening controllably transporting the sleeves 1 away from the ball when the rotating bodies 13 are turned upwards, and vice versa when turning towards the neck section 5 of the ball downwards. At the end of turning downwards, when the sleeve sections 1 have met the ball neck, their motion ends and curved end surfaces 19 of the cams 6 slide along the surfaces of the counter pieces 11 to the end of the path allowed by the triangular openings performing the locking of the device tightly around the hitch neck. At the end of the motion, the cam can be considered travelling along a gently oblique plane providing by means of the relatively great lever of the force bodies a considerably large tightening force despite the fact that the force required to turn the force bodies is relatively small. The small angle of inclination A (alpha) the cams having set in the locked position at the end of the motion section of the force body ensures that the force bodies try to stay in this position.

Fig. 5a shows how the locking of the step in the ball of the towing hitch can be ensured by means of the lock sleeves 14 which the person releases after the motion of the force bodies has reached its extreme position. A spring 15 pulls the lock sleeves in the extreme position of its motion range, whereby the ends of the lock sleeves transfer below the ends of the middle body 3. The force body cannot be turned upwards from this position until the user has pulled both lock sleeves 14, 14a against the springs 15 towards the end of the rotating body 13 far enough in order to release the ends of the lock sleeves from below the middle section. The right-hand half is locked, as shown at the point 20a; the head of the lock sleeve 14a being below the edge of the middle body 3 and not being able to ascend until the lock sleeve 14a is pulled to the right. Meanwhile, the left-hand half in Fig. 5a is already pulled to the left, whereby the head of the lock sleeve 14 has exited the edge of the middle body 3 at the point 20 and the left-hand half can be turned up into its extreme position.

Fig. 6 shows how the lock sleeves 14 and 14a can be transferred towards the car bumper 21 after the locking such that rubber dampers 16 meet the surface of the bumper. When releasing the lock sleeves pushed close to the car, the springs 15 naturally pull the lock sleeves towards the centre of the device locking the halves 2 of the step board such that they cannot inadvertently ascend to the upper position. At the same time, the edge of the cavity of the middle body 3, in which the lock sleeve is able to move, seeks its way to the closest cavity 22 at suitable density cut on the edge of the lock sleeve 14, preventing the lock sleeve from further transferring forward or backward.

This arrangement prevents the step board according to the invention from flipping as the user mounts the step board.

In addition to the locking of the device in the hitch being a quick incidence, the transfer of the lock sleeves 14 and 14a towards the car can be connected to the locking event, whereby it does not substantially increase the time used for the fastening. If desired, the step board according to the invention can also be rotated around the vertical axis of the hitch such that its side is not parallel with the surface of the car bumper but forms an angle between them.

It should be mentioned that the step board according to the invention can be used with other towing hitches or equivalents than with the one shown. Then, the structure of the step board parts is altered in a way suited for the purpose.

The invention is not limited to the described advantageous embodiment, but it can vary within the scope of the claims.

## Claims

1. A step board fastenable to the towing hitch of a vehicle, the step board including a middle body (3) in which there are an opening and a space for the towing hitch (4, 5), which middle body (3) includes one or more movable sleeves (1), wherein the one or more sleeves (1) are movable towards the opening, and wherein the step board includes halves (2) on both sides of the middle body (3), rotatably fastened to the middle body, and a sleeve transfer mechanism (6) which is arranged to transfer the one or more sleeves (1) against the towing hitch and to lock the step board against the towing hitch (5) when the halves (2) are turned so as to be mainly horizontal.

2. A step board according to claim 1, ***characterised* in that** the halves (2) include rotating bodies (13) pivoted on the middle body (3) and the rotating bodies (13) include cams (6) for the linear transfer of the sleeves (1).

3. A step board according to claim 2, ***characterised* in that** in the rotating bodies (13) are fastened further lock sleeves (14) movably in the longitudinal direction and the middle body (3) includes locking points (20) for the further lock sleeves (14) in order to lock the rotating bodies (13) in the middle body (3).

4. A step board according to claim 1 or 2, ***characterised* in that** the middle body includes a support section (9) above the opening for the top part of the ball section (4) of the towing hitch, which support section (9) is sideways adjustable in relation to the sleeves (1) tightening against the neck section (5) of the hitch.

## Patentansprüche

1. Trittbrett, das an der Anhängekupplung eines Fahrzeugs befestigt werden kann, wobei das Trittbrett einen Mittenkörper (3) aufweist, in dem sich eine Öffnung und ein Raum für die Anhängekupplung (4, 5) befinden, wobei der Mittenkörper (3) eine oder mehrere bewegliche Hülsen (1) aufweist, wobei die eine oder die mehreren beweglichen Hülsen (1) zu der Öffnung beweglich sind und wobei das Trittbrett Hälften (2) auf beiden Seiten des Mittenkörpers (3) aufweist, die drehbar an dem Mittenkörper befestigt sind, und einen Hülsentransfermechanismus (6), der eingerichtet ist, um die eine oder die mehreren Hülsen (1) gegen die Anhängekupplung zu transferieren und das Trittbrett gegen die Anhängekupplung (5) zu verriegeln, wenn die Hälften (2) so gedreht sind, dass sie im Wesentlichen horizontal sind.

2. Trittbrett nach Anspruch 1, **dadurch gekennzeichnet, dass** die zwei Hälften (2) Drehkörper (13) aufweisen, die auf dem Mittenkörper (3) schwenken und dass die Drehkörper (13) Nocken (6) für den linearen Transfer der Hülsen (1) aufweisen.

3. Trittbrett nach Anspruch 2, **dadurch gekennzeichnet, dass** die Drehkörper (13) ferner an Verriegelungshülsen (14) befestigt sind, die in Längsrichtung beweglich sind, und dass der Mittenkörper (13) Verriegelungsstellen (20) für die weiteren Verriegelungshülsen (14) aufweist, um die Drehkörper (13) in dem Mittenkörper (3) zu blockieren.

4. Trittbrett nach Anspruch 1 oder 2, **dadurch gekennzeichnet, dass** der Mittenkörper einen Stützabschnitt (9) oberhalb der Öffnung für den oberen Teil des Kugelabschnitts (4) der Anhängekupplung aufweist, wobei der Stützabschnitt (9) seitlich in Bezug zu den Hülsen (1) zum Spannen gegen den Halsabschnitt (5) der Anhängekupplung einstellbar ist.

## Revendications

1. Marchepied apte à être fixé à un attelage de remorquage d'un véhicule, le marchepied comprenant un corps central (3) dans lequel se trouvent une ouverture et un espace pour l'attelage de remorquage (4, 5), ledit corps central (3) comprenant un ou plusieurs manchons mobiles (1), dans lequel un ou plusieurs des manchons (1) peuvent se déplacer vers l'ouverture, et dans lequel le marchepied comprend des moitiés (2) situées des deux côtés du corps central (3) et fixées au corps central, ainsi qu'un mécanisme de transfert (6) conçu pour transférer un ou plusieurs des manchons (1) contre l'attelage de remorquage (5) lorsque les moitiés (2) sont tournées de manière à être essentiellement horizontales.

2. Marchepied selon la revendication 1, **caractérisé en ce que** les moitiés (2) comprennent des corps rotatifs (13) pivotant sur le corps central (3), et les corps rotatifs (13) comprennent des cames (6) pour le transfert linéaire des manchons (1).

3. Marchepied selon la revendication 2, **caractérisé en ce que** dans les corps rotatifs (13) sont fixés des manchons de verrouillage (14) supplémentaires déplaçables dans la direction longitudinale, et le corps central (13) comprend des points de verrouillage (20) pour les manchons de verrouillage (14) supplémentaires, afin de verrouiller les corps rotatifs (13) dans le corps central (3).

4. Marchepied selon la revendication 1 ou 2, **caractérisé en ce que** le corps central comprend une section de support (9) au-dessus de l'ouverture pour la partie supérieure de la section de boule (4) de l'attelage de remorquage, ladite section de support (9) étant réglable latéralement par rapport aux manchons (1) par serrage contre la section de col (5) de l'attelage.
